# EUROPEAN PATENT APPLICATION

(11) **EP 2 562 944 A1**
(43) Date of publication of application: **27.02.2013**
(21) Application number: 10850253.5
(22) Date of filing: 23.04.2010
(51) Int. Cl.: H04B 10/02, H04J 14/00, H04J 14/02

(54) **OPTICAL COMMUNICATION SYSTEM**

(71) Applicant: Mitsubishi Electric Corporation, Tokyo 100-8310 (JP)
(72) Inventor: TOKURA, Toshiyuki, Tokyo 100-8310 (JP); SHIMIZU, Katsuhiro, Tokyo 100-8310 (JP); ISHIDA, Kazuyuki, Tokyo 100-8310 (JP); MIZUOCHI, Takashi, Tokyo 100-8310 (JP)
(74) Representative: Tischner, Oliver
(86) International application number: PCT/JP2010/057256
(87) International publication number: WO 2011/132312

(57) **Abstract**

The present invention is an optical communication system including a plurality of optical transmission systems each includes a transmission processing unit and a receiving processing unit, wherein the transmission processing unit includes an optical transmission unit (2a, 2b) that converts a plurality of electric signals into optical signals, and generates optical signals, an auxiliary optical transmission unit (4a, 4b) that converts a part of the electric signals into an optical signal, generates an optical signal having a wavelength other than wavelengths of the optical signals generated by the optical transmission unit (2a, 2b), and outputs the generated optical signal to a different transmission processing unit, and a wavelength multiplexing unit (3a, 3b) that multiplexes the optical signals and outputs an optical signal in a multiplexed state to an optical-fiber transmission line, and the receiving processing unit includes a wavelength demultiplexing unit (6a, 6b) that demultiplexes the optical signal in a multiplexed state into optical signals at the respective wavelengths, an optical receiving unit (7a, 7b) that converts the optical signals having the wavelengths of the optical signals generated by the optical transmission unit (2a, 2b) among the demultiplexed optical signals into electric signals, respectively, and an auxiliary optical receiving unit (8a, 8b) that converts the optical signal having the wavelength of the optical signal generated by the auxiliary optical transmission unit (4a, 4b) among the demultiplexed optical signals into an electric signal.

## Description

### Field

The present invention relates to an optical communication system that multiplexes a plurality of optical signals each having a different wavelength and transmits a multiplexed optical signal.

### Background

A long-haul wavelength-division multiplexing optical communication system such as a system using a submarine cable has a problem of lower system reliability. This is because the number of optical transmitters and optical receivers increases and the failure rate of these devices (optical transmitters and optical receivers) increases along with the increase in the number of wavelengths to be multiplexed.

As measures for solving this problem, Non Patent Literature 1 mentioned below describes a redundant system that has improved system reliability by including an auxiliary optical transmitter and an auxiliary optical receiver.

In the system described in Non Patent Literature 1, a transmitting side includes a plurality of optical transmitters (actually used optical transmitters) corresponding to optical signals to be multiplexed and transmitted, respectively, an auxiliary optical transmitter, and a multiplexing unit that multiplexes the optical signals output from the actually used optical transmitters and the auxiliary optical transmitter and outputs a multiplexed optical signal to a submarine cable. A receiving side includes a demultiplexing unit that demultiplexes the optical signal (an optical signal in a multiplexed state) received via the submarine cable, a plurality of optical receivers (actually used optical receivers) corresponding to demultiplexed optical signals, respectively, and an auxiliary optical receiver. Furthermore, the signal input to each of the actually used optical transmitters is branched and input to the auxiliary optical transmitter, and the auxiliary optical transmitter is configured to be able to select one of the input signals, to convert the selected signal into an optical signal, and to output the optical signal to the multiplexing unit. The auxiliary optical receiver is configured to be able to receive the optical signals transmitted from the auxiliary optical transmitter via the demultiplexing unit, to convert the optical signals into electric signals, and to output each of the electric signals to any one of transmission lines connected to the actually used optical receivers, respectively.

By employing such a configuration, the conventional system described in Non Patent Literature 1 realizes the improvement in reliability. For example, if one of the actually used optical transmitters fails, the auxiliary optical transmitter and the auxiliary optical receiver replace the failed optical transmitter and the optical receiver paired with this failed optical transmitter, respectively, and transmit information. That is, the auxiliary optical transmitter selects the same signal as the signal input to the failed optical transmitter, converts the signal into an optical signal, and transmits the optical signal. The auxiliary optical receiver receives the optical signal transmitted from the auxiliary optical transmitter, converts the received optical signal into an electric signal, and outputs the electric signal to a transmission line connected to the actually used optical receiver that receives the optical signal from the failed optical transmitter. In this way, the system that employs the configuration disclosed in Non Patent Literature 1 can keep normal communication even when a failure occurs to a part of the actually used devices.

### Citation List

### Non Patent Literature

Non Patent Literature 1: "10GBPS REDUNDANT LINE TERMINATING UNIT FOR SUBMARINE CABLE SYSTEMS", SubOptic2001 (2001 International Convention on Subsea Networks) Paper number P4.2.1

### Summary

### Technical Problem

However, if the configurations of devices other than the optical transmitters and the optical receivers are complicated and the number of components such as optical amplifiers and dispersion compensators increases as the size of the system is made larger, the following problems occur to the conventional system. That is, even when the configuration disclosed in Non Patent Literature 1 is used to make the optical transmitters and the optical receivers redundant, the effect of improving the reliability of the overall system is low and sufficient reliability is not ensured.

For example, as the size of the system is made larger, the number of optical amplifiers that are active components having a higher failure rate than the failure rate of a multiplexer and a demultiplexer corresponding to the multiplexing unit and the demultiplexing unit increases, and the number of optical amplifiers for amplifying the light in a multiplexed state also increases. When the optical amplifier that amplifies the light in a multiplexed state fails, the system is unable to continue communication at all, resulting in a system failure. In this way, with the configuration disclosed in Non Patent Literature 1, it is impossible to take any measures against failures that occur to the component dealing with optical signals in a multiplexed state. That is, the technique of Non Patent Literature 1 has no improvement in the reliability of components dealing with optical signals in a multiplexed state.

The present invention has been achieved in view of the above problems, and an object of the present invention is to provide an optical communication system having higher reliability than conventional optical communication systems.

### Solution to Problem

To solve the above problems and achieve an object, there is provided an optical communication system according to the present invention including a plurality of optical transmission systems each includes a transmission processing unit and a receiving processing unit that transmit and receive an optical signal via an optical-fiber transmission line, wherein the transmission processing unit includes an optical transmission unit that receives a plurality of input electric signals, converts the input signals into optical signals, and generates optical signals having different wavelengths, respectively, an auxiliary optical transmission unit that converts a part of the electric signals into an optical signal, generates an optical signal having a wavelength other than the wavelengths of the optical signals generated by the optical transmission unit, and outputs the generated optical signal to a different transmission processing unit, and a wavelength multiplexing unit that multiplexes the optical signals generated by the optical transmission unit and an optical signal generated by an auxiliary optical transmission unit of a different transmission processing unit, and outputs an optical signal in a multiplexed state to an optical-fiber transmission line connected to the wavelength multiplexing unit, and the receiving processing unit includes a wavelength demultiplexing unit that receives the optical signal in a multiplexed state output from the transmission processing unit to the optical-fiber transmission line, and demultiplexes the optical signal in a multiplexed state into optical signals having the respective wavelengths, an optical receiving unit that converts the optical signals having the wavelengths of the optical signals generated by the optical transmission unit among the optical signals demultiplexed by the wavelength demultiplexing unit into electric signals, respectively, and an auxiliary optical receiving unit that converts the optical signal having the wavelength of the optical signal generated by the auxiliary optical transmission unit among the optical signals demultiplexed by the wavelength demultiplexing unit into an electric signal.

### Advantageous Effects of Invention

The optical communication system according to the present invention can continue communication using the auxiliary system even when a component dealing with optical signals in a multiplexed state fails, and therefore it is possible to realize a higher failure resistance than that of conventional optical communication systems and to improve the reliability.

### Brief Description of Drawings

FIG. 1 is a configuration example of an optical communication system according to a first embodiment.
FIG. 2 is an explanatory diagram of operations in a case where a part of devices that constitute an optical communication system falls.
FIG. 3 is a configuration example of an optical communication system according to a second embodiment. Description of Embodiments

Exemplary embodiments of an optical communication system according to the present invention will be explained below in detail with reference to the accompanying drawings. The present invention is not limited to the embodiments.

### First embodiment

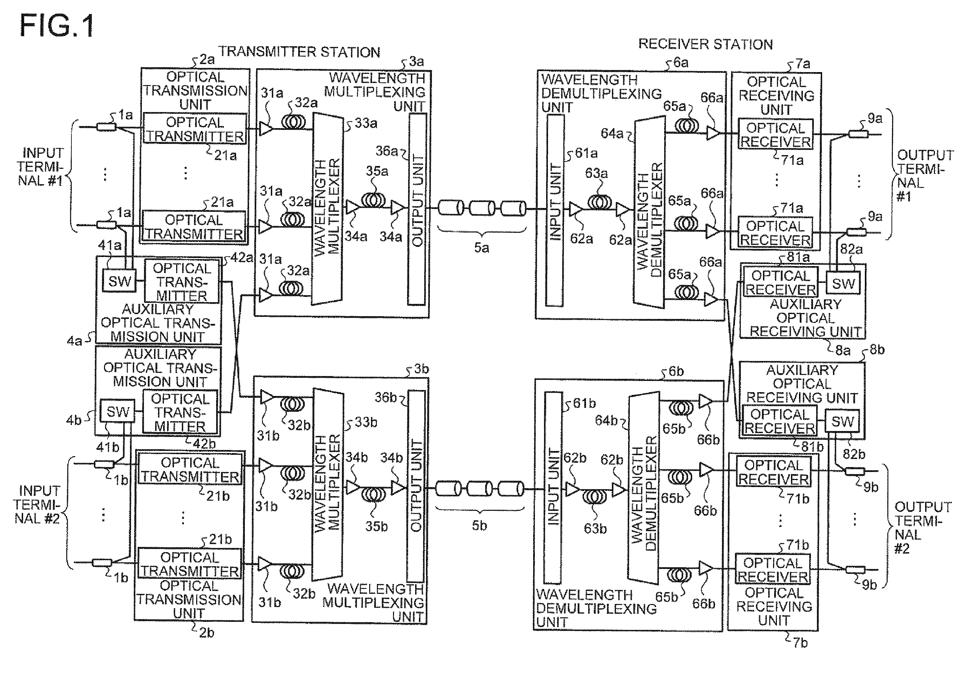

FIG. 1 is a configuration example of an optical communication system according to a first embodiment of the present invention. The optical communication system shown in FIG. 1 is constituted by a transmitter station that is a transmitting-side optical communication device and a receiver station that is a receiving-side optical communication device. The transmitter station and the receiver station are connected to each other by a plurality of transmission lines (optical-fiber transmission lines 5a and 5b). In the present embodiment, it is assumed that the optical-fiber transmission lines 5a and 5b are bundled into one submarine cable. These are independent optical fibers, and optical transmission systems that transmit and receive optical signals via the respective optical-fiber transmission lines are independent wavelength-division multiplexing optical transmission systems. Optical repeaters are provided on the optical-fiber transmission lines 5a and 5b at a predetermined distance interval as needed, and the optical repeaters amplify and repeat received optical signals.

The transmitter station includes a plurality of transmission processing units identical in configuration. Similarly, the receiver station includes a plurality of receiving processing units identical in configuration. Only a first transmission processing unit and a first receiving processing unit included in a first optical transmission system are explained here, and explanations of a second transmission processing unit and a second receiving processing unit included in a second optical transmission system are omitted. Note that 'a' is added to reference signs of elements included in the first optical transmission system, and that 'b' is added to reference signs of those included in the second optical transmission system.

The first transmission processing unit is explained first. As shown in FIG. 1, the first transmission processing unit includes a plurality of couplers 1a, an optical transmission unit 2a, a wavelength multiplexing unit 3a, and an auxiliary optical transmission unit 4a.

Each of the couplers 1a distributes a signal (an electric signal) input from an input terminal #1 to the optical transmission unit 2a and the auxiliary optical transmission unit 4a.

The optical transmission unit 2a is configured to include a plurality of optical transmitters 21a each of which converts the electric signal received from each coupler 1a connected to the optical transmitter 21a into an optical signal. The optical transmitters 21a generate light (optical signals) having respectively different wavelengths.

The wavelength multiplexing unit 3a is configured to include a plurality of optical amplifiers 31a each of which amplifies one of the optical signals, a plurality of dispersion compensation fibers 32a each of which makes dispersion compensation for the optical signal amplified by each optical amplifier 31a, a wavelength multiplexer 33a that multiplexes the amplified and dispersion-compensated optical signals, optical amplifiers 34a and a dispersion compensation fiber 35a that amplify and make dispersion compensation for the light multiplexed on one optical fiber by the wavelength multiplexer 33a, and an output unit 36a that outputs an optical signal obtained as a result of multiplexing, amplification, dispersion compensation, and the like to the optical-fiber transmission line 5a. Not only the optical amplifiers 31a and the dispersion compensation fibers 32a but also filters that reduce crosstalk among the wavelengths, filters that correct level deviations among the wavelengths, polarization scramblers that eliminate deviations in the state of polarization, and the like can be arranged before the wavelength multiplexer 33a as needed.

The auxiliary optical transmission unit 4a is configured to include a switch 41a that receives the signals output from couplers 1a and that selects and outputs one of these signals, and an optical transmitter 42a that converts the signal selected by the switch 41a into an optical signal. The optical transmitter 42a generates the optical signal having a different wavelength from that of the optical signals transmitted from the respective optical transmitters 21a that constitute the optical transmission unit 2a, and outputs the generated optical signal.

As shown in FIG. 1, the optical signal output from the auxiliary optical transmission unit 4a is input to a wavelength multiplexing unit 3b of the second transmission processing unit, and output to the second receiving processing unit after an amplification process, a dispersion compensation process, a multiplexing process, and the like are performed on optical signals output from an optical transmission unit 2b.

The first receiving processing unit is explained next. As shown in FIG. 1, the first receiving processing unit includes a wavelength demultiplexing unit 6a, an optical receiving unit 7a, an auxiliary optical receiving unit 8a, and couplers 9a.

The wavelength demultiplexing unit 6a is configured to include an input unit 61a that receives the optical signal in a multiplexed state from the optical-fiber transmission line 5a, optical amplifiers 62a and a dispersion compensation fiber 63a that amplify and make dispersion compensation for the optical signal in a multiplexed state, a wavelength demultiplexer 64a that demultiplexes the optical signal in a multiplexed state into the respective wavelengths, and a plurality of dispersion compensation fibers 65a and optical amplifiers 66a that make dispersion compensation for and amplify the demultiplexed optical signals. Not only the dispersion compensation fibers 65a and the optical amplifiers 66a but also filters that reduce crosstalk among the wavelengths, filters that correct level deviations among the wavelengths, polarization scramblers that eliminate deviations in the state of polarization, and the like can be arranged following the wavelength demultiplexer 64a as needed.

The optical receiving unit 7a is configured to include a plurality of optical receivers 71a each of which converts the optical signal having a specific wavelength among the demultiplexed optical signals into an electric signal and outputs the electric signal. Each optical receiver 71a corresponds to one of the optical transmitters 21a that constitute the optical transmission unit 2a of the first transmission processing unit, receives the optical signal generated by the corresponding optical transmitter 21a, and converts the received optical signal into the electric signal.

The auxiliary optical receiving unit 8a is configured to include an optical receiver 81a that receives the optical signal generated by the auxiliary optical transmission unit 4a among the demultiplexed optical signals and that converts the received optical signal into an electric signal, and a switch 82a that outputs the electric signal output from the optical receiver 81a to one of transmission lines connected to the optical receivers 71a, respectively.

Furthermore, as shown in FIG. 1, the optical signal that is output from the auxiliary optical transmission unit 4a and that has been subjected to predetermined processes (similar to processes performed by the wavelength multiplexing unit 3a and a wavelength demultiplexing unit 6b) performed by the wavelength multiplexing unit 3b and the wavelength demultiplexing unit 6b of the second receiving processing unit is also input to the auxiliary optical receiving unit 8a.

Each of the couplers 9a selects and outputs the signal received from the optical receiving unit 7a or that received from the auxiliary optical receiving unit 8a.

As described above, the optical communication system according to the present embodiment includes the two independent optical transmission systems (first and second optical transmission systems), and each of the optical transmission systems includes the auxiliary optical transmission unit and the auxiliary optical receiving unit. The optical communication system is also configured to transmit the optical signals output from the auxiliary optical transmission units (the auxiliary optical transmission units 4a and 4b) to the opposed auxiliary optical receiving units (the auxiliary optical receiving units 8a and 8b) via the wavelength multiplexing units and the wavelength demultiplexing units of other optical transmission systems, respectively. It is thereby possible to realize a higher failure resistance than that of conventional optical communication systems.

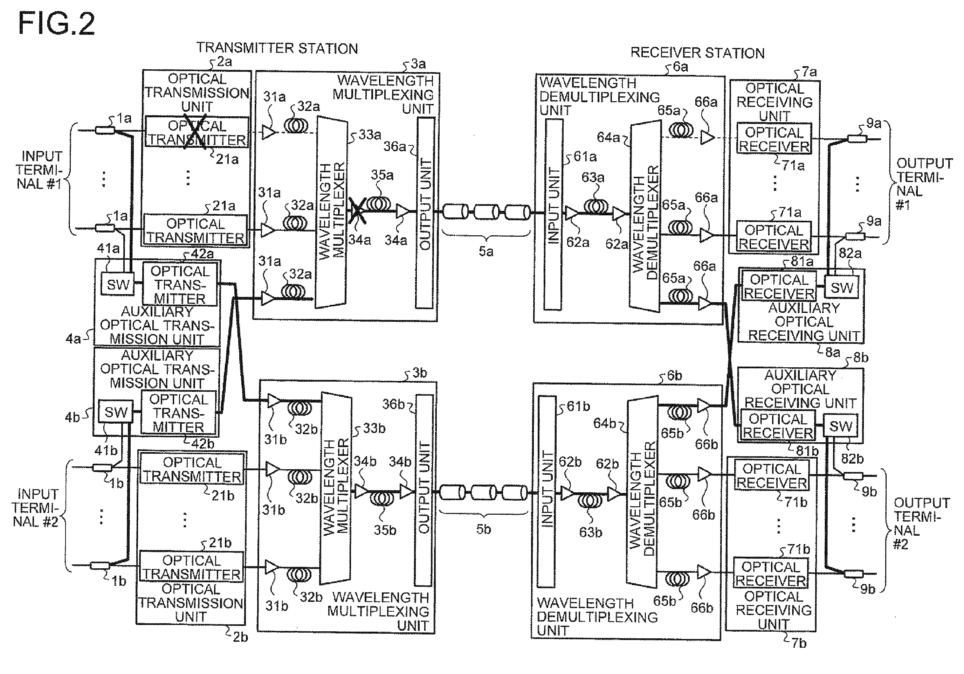

This reason is explained with reference to FIG. 2. FIG. 2 is an explanatory diagram of operations in a case where a part of devices that constitute the optical communication system according to the first embodiment fails.

### (Case where optical transmitter 21a of optical transmission unit 2a fails)

As shown in FIG. 2, when it is detected that one of the optical transmitters 21a fails in the optical communication system according to the present embodiment, the switch 41a of the auxiliary optical transmission unit 4a selects the signal distributed from the coupler 1a connected to the failure-detected optical transmitter 21a and outputs the signal to the optical transmitter 42a. As a result, the signal selected by the optical transmitter 42a is converted into the optical signal by the optical transmitter 42a, and is received at the auxiliary optical receiving unit 8a via the wavelength multiplexing unit 3b, the optical-fiber transmission line 5b, and the wavelength demultiplexing unit 6b that constitute the second optical transmission system. The optical receiver 81a of the auxiliary optical receiving unit 8a converts the optical signal into the electric signal. Furthermore, the switch 82a switches a destination to which an input signal from the switch 82a is output to the coupler 9a connected to the optical receiver 71a that corresponds to the failure-detected optical transmitter 21a. The coupler 9a to which the signal is input from the switch 82a selects the input signal from the switch 82a and outputs the input signal to the transmission line.

In this way, the optical communication system according to the present embodiment can continue communication by replacing the failed optical transmitter 21a with an auxiliary system (a transmission path from the auxiliary optical transmission unit 4a to the auxiliary optical receiving unit 8a). Similarly, in a case where one of the optical receivers 71a fails, the optical communication system according to the present embodiment can continue communication by switching the switch 41a of the auxiliary optical transmission unit 4a and the switch 82a of the auxiliary optical receiving unit 8a according to the failed portion.

### (Case where optical amplifier 34a of wavelength multiplexing unit 3a fails)

In this case, it is impossible to transmit all the optical signals output from the optical transmission unit 2a via the optical-fiber transmission line 5a because one of the components that deal with multiplexed optical signals fails (see FIG. 2). However, by using the auxiliary optical transmission unit 4a, one of the signals distributed by the couplers 1a can be transmitted to the receiving side. When the optical communication system employs a configuration of including a plurality of auxiliary systems (each including the auxiliary optical transmission unit 4a and the auxiliary optical receiving unit 8a), a plurality of signals (as many as the auxiliary systems) can be transmitted to the receiving side. In contrast, in a conventional optical communication system (an optical communication system that employs the configuration disclosed in Non Patent Literature 1 mentioned above), when one component that deals with multiplexed optical signals fails, the optical signal transmitted from the optical transmitter of the auxiliary system is also not transmitted to the receiving side. Similarly, in a case where one of the components (such as one of the optical amplifiers 62a) that deal with optical signals in a multiplexed state fails, at least one signal (as many as the number of auxiliary systems) can be normally transmitted. As for which signal is to be transmitted, the signal having a higher priority is selected and transmitted if the transmitted signals have different priorities (degrees of importance), for example. Alternatively, if the signals differ in an amount of information while having the same priority, the signal having a larger amount of information can be selected and transmitted.

In this way, the optical communication system according to the present embodiment can normally transmit a part of signals by the use of the auxiliary system even when the component that deals with optical signals in a multiplexed state fails.

As described above, the optical communication system according to the present embodiment can continue communication even when one of the components (one of the optical transmitters 21a shown in FIG. 2, for example) that deal with optical signals having the respective wavelengths before the multiplexing fails. Furthermore, the optical communication system according to the present embodiment can continue communication even when one of the components (one of the optical amplifiers 34a shown in FIG. 2, for example) that deal with optical signals in a multiplexed state fails. Therefore, it is possible to realize a higher failure resistance than that of conventional optical communication systems and to realize the optical communication system having high reliability.

While a case where each optical transmission system includes a pair of an auxiliary optical transmitter and a auxiliary optical receiver has been explained in the present embodiment for brevity, each optical transmission system can include a plurality of pairs of auxiliary optical transmitters and auxiliary optical receivers.

### Second embodiment

An optical communication system according to a second embodiment is explained next. In the first embodiment, a case where the optical communication system includes a plurality of independent optical transmission systems has been explained. In the present embodiment, the optical communication system that realizes a high failure resistance by the use of a single optical transmission system is explained.

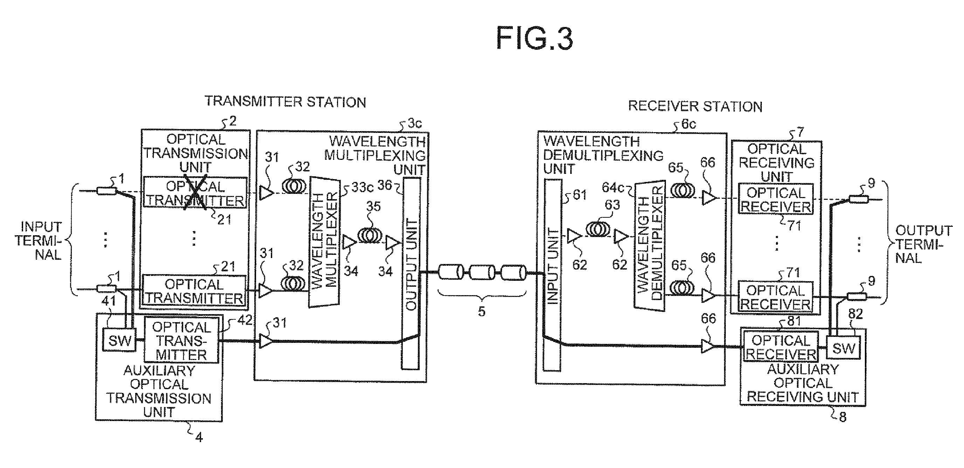

FIG. 3 is a configuration example of the optical communication system according to the second embodiment. As shown in FIG. 3, a transmitter station according to the present embodiment includes, as a transmission processing unit, a plurality of couplers 1, an optical transmission unit 2, a wavelength multiplexing unit 3c, and an auxiliary optical transmission unit 4. Elements other than the wavelength multiplexing unit 3c are identical to the transmission processing units (first and second transmission processing units) included in the transmitter station according to the first embodiment. However, the auxiliary optical transmission unit 4 outputs the generated optical signal to the wavelength multiplexing unit 3c. Furthermore, a receiver station according to the present embodiment includes, as a receiving processing unit, a wavelength demultiplexing unit 6c, an optical receiving unit 7, an auxiliary optical receiving unit 8, and couplers 9. Elements other than the wavelength demultiplexing unit 6c are identical to the receiving processing units (first and second receiving processing units) included in the receiver station according to the first embodiment. However, the auxiliary optical receiving unit 8 deals with an optical signal output from the wavelength demultiplexing unit 6c. An optical receiver 81 and a switch 82 are the same as the optical receivers (the optical receivers 81a and 81b) and the switches (the switches 82a and 82b) shown in the first embodiment.

In the present embodiment, operations performed by portions different from the optical transmission systems included in the optical communication system according to the first embodiment, which are specifically the wavelength multiplexing unit 3c and the wavelength demultiplexing unit 6c are mainly described.

As shown in FIG. 3, the wavelength multiplexing unit 3c includes a plurality of optical amplifiers 31 and 34, a plurality of dispersion compensation fibers 32 and 35, a wavelength multiplexer 33c, and an output unit 36.

Each of the optical amplifiers 31 is connected to each optical transmitter 21 of the optical transmission unit 1 or an optical transmitter 42 of the auxiliary optical transmission unit 4, and amplifies an input optical signal. Each of the dispersion compensation fibers 32 makes dispersion compensation for the optical signal output from each optical transmitter 21 and amplified by each optical amplifier 31. The wavelength multiplexer 33c multiplies the multiplexed and dispersion-compensated optical signals. That is, the wavelength multiplexer 33c multiplexes the optical signals generated by the respective optical transmitters 21 of the optical transmission unit 2. Each of the optical amplifiers 34 amplifies the optical signal multiplexed by the wavelength multiplexer 33c (an optical signal in a multiplexed state). The dispersion compensation fiber 35 makes dispersion compensation for the optical signal in a multiplexed state. The output unit 36 outputs the optical signal output from the wavelength multiplexer 33c (an optical signal in a multiplexed state) and the optical signal output from the auxiliary signal transmission unit 4 to an optical-fiber transmission line 5.

On the other hand, the wavelength demultiplexing unit 6c includes an input unit 61, a plurality of optical amplifiers 62 and 66, a plurality of dispersion compensation fibers 63 and 65, and a wavelength demultiplexer 64c.

The input unit 61 receives the optical signal transmitted from the transmitter station via the optical-fiber transmission line 5. Each of the optical amplifiers 62 amplifies the optical signal in a multiplexed state among those received by the input unit 61. The dispersion compensation fiber 63 makes dispersion compensation for the optical signal in a multiplexed state. The wavelength demultiplexer 64c demultiplexes the optical signal in a multiplexed state into the respective wavelengths. Each of the dispersion compensation fibers 65 makes dispersion compensation for each of the optical signals demultiplexed by the wavelength demultiplexer 64c. Each of the optical amplifiers 66 amplifies each of the optical signals demultiplexed by the wavelength demultiplexer 64c or the optical signal transmitted from the auxiliary optical transmission unit 4 without being multiplexed.

A path from the auxiliary optical transmission unit 4 to the auxiliary optical receiving unit 8 via the optical-fiber transmission line 5 constitutes an auxiliary system smaller in the number of optical amplifiers and in the number of dispersion compensation fibers than the other paths from the actually used optical transmitter at the other wavelengths (each of the optical transmitters 21 of the optical transmission unit 2) to the actually used optical receiver (each of the optical receivers 71 of the optical receiving unit 7), and lower in a failure rate. Because of including the auxiliary system lower in the failure rate, the optical communication system according to the present embodiment can continue communication by the use of the auxiliary system that replaces a failed path even when one of the actually used systems at the other wavelengths fails. Moreover, similarly to the first embodiment, the optical communication system according to the present embodiment can continue communication by the use of the auxiliary system even when one of the components that deal with multiplexed optical signals fails.

It is desirable to select a wavelength closest to a zero-dispersion wavelength of the optical-fiber transmission line 5 as an output wavelength of the auxiliary optical transmission unit 4 so as to make the path from the auxiliary optical transmission unit 4 to the auxiliary optical receiving unit 8 a highly reliable path having fewer optical amplifiers and fewer dispersion compensation fibers. The zero-dispersion wavelength is a wavelength at which wavelength dispersion is zero. If the output wavelength of the auxiliary optical transmission unit 4 is closer to the zero-dispersion wavelength, it is unnecessary to make dispersion compensation. This can eliminate the dispersion compensation fibers and the optical amplifiers for compensating for the loss of the dispersion compensation fibers. As a result, it is possible to reduce the number of components having a high failure rate and to realize the auxiliary system lower in the failure rate on the transmitter station. Furthermore, even when the output wavelength of the auxiliary optical transmission unit 4 is away from the zero-dispersion wavelength to some extent, it is also possible to eliminate the dispersion compensation fibers and the optical amplifiers on the receiver station as long as the wavelength dispersion is close to zero on the optical-fiber transmission line 5 and is within a range in which the auxiliary optical receiver can receive the signal without making any dispersion compensation. Thus, the auxiliary system lower in a failure rate can be realized.

In this way, in the optical communication system according to the present embodiment, the auxiliary system is configured to have fewer components, particularly fewer components having a high failure rate on the transmission paths. Specifically, the auxiliary optical transmission unit generates and transmits the optical signal at the wavelength closest to the zero-dispersion wavelength of the optical transmission line (the optical-fiber transmission line 5), thereby making it unnecessary to make dispersion compensation in the auxiliary system. It is thereby possible to realize the auxiliary system that is reduced in the number of the components for dispersion compensation (dispersion compensation fibers) and in the number of the optical amplifiers that compensate for the loss of these components, and lower in the failure rate. As a result, it is possible to improve the reliability of the overall system.

While a case where the number of the auxiliary system is one has been explained in the present embodiment, the auxiliary system can be provided in plural as needed.

Furthermore, while a case where the dispersion compensation fibers realize dispersion compensation units in each of the embodiments, other dispersion compensation units can also make dispersion compensation. For example, it is obvious to achieve same effects even in a case where variable dispersion compensators using fiber gratings or etalons are used in place of dispersion compensation fibers, and this case is also within the scope of the present invention.

### Industrial Applicability

As described above, the optical communication system according to the present invention is useful as an optical communication system for wavelength-division multiplexing transmission of optical signals, and is particularly suitable for an optical communication system that realizes highly reliable communication by making a part of a system redundant.

### Reference Signs List

1, 1a, 1b COUPLER
2, 2a, 2b OPTICAL TRANSMISSION UNIT
21, 21a, 21b OPTICAL TRANSMITTER
3a, 3b, 3c WAVELENGTH MULTIPLEXING UNIT
31, 31a, 31b, 34, 34a, 34b OPTICAL AMPLIFIER
32, 32a, 32b, 35, 35a, 35b DISPERSION COMPENSATION FIBER
33a, 33b, 33c WAVELENGTH MULTIPLEXER
36, 36a, 36b OUTPUT UNIT
4, 4a, 4b AUXILIARY OPTICAL TRANSMISSION UNIT
41, 41a, 41b SWITCH
42, 42a, 42b OPTICAL TRANSMITTER
5, 5a, 5b OPTICAL-FIBER TRANSMISSION LINE
6a, 6b, 6c WAVELENGTH DEMULTIPLEXING UNIT
61, 61a, 61b INPUT UNIT
62, 62a, 62b, 66, 66a, 66b OPTICAL AMPLIFIER
63, 63a, 63b, 65, 65a, 65b DISPERSION COMPENSATION FIBER
64a, 64b, 64c WAVELENGTH DEMULTIPLEXER
7, 7a, 7b OPTICAL RECEIVING UNIT
71, 71a, 71b OPTICAL RECEIVER
8, 8a, 8b AUXILIARY OPTICAL RECEIVING UNIT
81, 81a, 81b OPTICAL RECEIVER
82, 82a, 82b SWITCH
9, 9a, 9b COUPLER

## Claims

1. An optical communication system comprising a plurality of optical transmission systems each includes a transmission processing unit and a receiving processing unit that transmit and receive an optical signal via an optical-fiber transmission line, wherein
the transmission processing unit includes
an optical transmission unit that receives a plurality of input electric signals, converts the input signals into optical signals, and generates optical signals having different wavelengths, respectively,
an auxiliary optical transmission unit that converts a part of the electric signals into an optical signal, generates an optical signal having a wavelength other than the wavelengths of the optical signals generated by the optical transmission unit, and outputs the generated optical signal to a different transmission processing unit, and
a wavelength multiplexing unit that multiplexes the optical signals generated by the optical transmission unit and an optical signal generated by an auxiliary optical transmission unit of a different transmission processing unit, and outputs an optical signal in a multiplexed state to an optical-fiber transmission line connected to the wavelength multiplexing unit, and
the receiving processing unit includes
a wavelength demultiplexing unit that receives the optical signal in a multiplexed state output from the transmission processing unit to the optical-fiber transmission line, and demultiplexer the optical signal in a multiplexed state into optical signals having the respective wavelengths,
an optical receiving unit that converts the optical signals having the wavelengths of the optical signals generated by the optical transmission unit among the optical signals demultiplexed by the wavelength demultiplexing unit into electric signals, respectively, and
an auxiliary optical receiving unit that converts the optical signal having the wavelength of the optical signal generated by the auxiliary optical transmission unit among the optical signals demultiplexed by the wavelength demultiplexing unit into an electric signal.

2. The optical communication system according to claim 1, wherein
when a component that deals with one of the optical signals before being multiplexed and a component that deals with one of the optical signals after being demultiplexed fail among components that constitute a transmission line from the optical transmission unit to the optical receiving unit,
the auxiliary optical transmission unit in a same optical transmission system as the optical transmission system including a failed component selects the electric signal corresponding to the optical signal having the wavelength dealt with by the failed component, and converts the selected electric signal into the optical signal, and
the auxiliary optical receiving unit in a same optical transmission system as the optical transmission system including a failed component outputs the electric signal obtained by performing a conversion process to a transmission line corresponding to the optical signal having the wavelength dealt with by the failed component among transmission lines for the electric signals connected to the optical receiving unit.

3. The optical communication system according to claim 1 or 2, wherein
when a component that deals with the optical signal in a multiplexed state fails among components that constitute a transmission line from the optical transmission unit to the optical receiving unit,
the auxiliary optical receiving unit in the same optical transmission system as the optical transmission system including the failed component outputs the electric signal obtained by performing a conversion process to a transmission line, to which the electric signal obtained by converting the optical signal corresponding to the signal selected by the auxiliary optical transmission unit is output, among transmission lines for the electric signals connected to the optical receiving units.

4. An optical communication system comprising a transmission processing unit and a receiving processing unit that transmit and receive an optical signal via an optical-fiber transmission line, wherein
the transmission processing unit includes
an optical transmission unit that receives a plurality of input electric signals, and that converts and generates the input signals into optical signals having different wavelengths, respectively,
an auxiliary optical transmission unit that converts a part of the electric signals into an optical signal, and generates an optical signal having a wavelength other than the wavelengths of the optical signals generated by the optical transmission unit, and
a wavelength multiplexing unit that receives the optical signals generated by the optical transmission unit and the optical signal generated by the auxiliary optical transmission unit, multiplexes the optical signals generated by the optical transmission unit, and outputs an optical signal in a multiplexed state to the optical-fiber transmission line,
the receiving processing unit includes
a wavelength demultiplexing unit that receives the optical signal output from the transmission processing unit to the optical-fiber transmission line, and demultiplexes the optical signal in a multiplexed state into optical signals at the respective wavelengths when receiving the optical signal in a multiplexed state,
an optical receiving unit that converts the optical signals obtained by a demultiplexing process performed by the wavelength demultiplexing unit into electric signals, respectively, and
an auxiliary optical receiving unit that converts the optical signal received by the wavelength demultiplexing unit in a non-multiplexed state into an electric signal, and wherein
the optical communication system is configured so that the number of components per wavelength arranged on a transmission line from the auxiliary optical transmission unit to the auxiliary optical receiving unit is smaller than the number of components per wavelength from the optical transmission unit to the optical receiving unit.

5. The optical communication system according to claim 4, wherein the auxiliary optical transmission unit generates an optical signal having a wavelength close to a zero-dispersion wavelength of the optical-fiber transmission line.

6. The optical communication system according to claim 4, wherein the auxiliary optical transmission unit generates an optical signal having a wavelength at which a wavelength dispersion amount on a transmission line falls in a range in which the optical signal is capable to be received without making any dispersion compensation in the auxiliary optical receiving unit.
